# EUROPEAN PATENT SPECIFICATION

(11) **EP 3 758 323 B1**
(45) Date of publication and mention of the grant of the patent: **12.06.2024**
(21) Application number: 19382532.0
(22) Date of filing: 24.06.2019
(51) Int. Cl.: H04L 65/1069, H04L 65/1094, H04M 3/42, H04W 4/02

(54) **CALL PROCESSING UNIT, METHOD AND COMPUTER PROGRAM**
ANRUFVERARBEITUNGSEINHEIT, VERFAHREN UND COMPUTERPROGRAMM
UNITÉ DE TRAITEMENT D'APPELS, PROCÉDÉ ET PROGRAMME INFORMATIQUE

(43) Date of publication of application: 30.12.2020
(73) Proprietor: Vodafone IP Licensing Limited, Newbury, Berkshire RG14 2FN (GB); Vodafone Group Services Limited, Newbury, Berkshire RG14 2FN (GB)
(72) Inventor: Domínguez, Rafael, London, W2 6BY (GB); Fernández, Javier Leopoldo, London, W2 6BY (GB); Muñoz, Verónica, London, W2 6BY (GB)
(74) Representative: Boult Wade Tennant LLP

(56) References cited:
- US-A1- 2004 257 273
- US-A1- 2013 178 198

## Description

### Field

The invention relates to a call processing unit and method for processing calls in a multiple device system.

### Background

The use of assistants, home assistants or other similar devices has rapidly expanded recently. Such assistant devices enable users to access information and control other device using voice commands. Generally, the assistant device will always be listening through a microphone and will be waiting for a key word that indicates that the user is communicating with the assistant device, rather than having a conversation with someone else. Once the user has given the keyword, they can ask for example questions to the assistant device for the device to find out an answer and give the answer to the user through a speaker. In another example, the user can ask the assistant device to take an action, for example add a reminder in the user's calendar, send an email or start a call.

Such devices can also be trained to recognise different users and can then operate in slightly different manner depending on which user instructed the device. For example, if asked to add a task on a "to-do" list, the device will add the task to the list that corresponds to the user who gave the instruction.

While these devices can be very convenient for the users, they do not follow the same rules and regulations as fixed or mobile network devices for example. As a result, when it comes to more advanced calling features, they may not be suitable anymore as they can raise a number of security and safety questions or problems.

US Patent Publication no. US 2013/178198 describes a communications system including a telephone terminal associated with a first near field communication (NFC) device, and a mobile device associated with a second NFC device. The telephone terminal is associated with a first caller identification (ID), and the mobile device is associated with a second caller ID. The telephone terminal may place a telephone call over a telephone network, substituting the second caller ID for the first caller ID upon communication between the first NFC device and the second NFC device.

US patent publication, US 2004/257273 A1 describes that geographic coordinates of user equipment of a calling party are determined either by communicating with a GPS receiver associated with the user equipment of the calling party or by cellular triangulation. The geographic coordinates may be converted into an associated common location description. For example the common location description is a city name, an address, or a distance and direction from a landmark. The common location description, or an abbreviation thereof, is transmitted to user equipment of a called party. Using this service, parents may verify the location of their children. Security agencies or delivery services may verify and/or log the location of their personnel.

### Summary

According to a first aspect of the present disclosure, a call processing unit, according to independent claim 1, is provided for processing a call in a communication system. The call processing unit is configured to receive a session establishment message from a calling device, the message comprising a caller identifier; to determine that the caller identifier is associated with a mobile identity and that a mobile device was in the proximity of the calling device when the session establishment message was generated at the calling device, the mobile device being associated with the mobile identity; to obtain a location for the mobile device; and to modify the session establishment message to include a mobile identifier associated with the mobile device and to include device location information based on the obtained location.

The location for the mobile device may be a cellular location for the mobile device. For example, the cellular location may comprise, or be derived from, one or more of a cell identifier (Cell ID, ECGI); a base station ID (eNB ID; Global eNB ID); a Location Area Code (LAC); a Mobile Network Code (MNC); a Mobile Country Code (MCC); a Tracking Area Code (TAC) and a Tracking Area Identity (TAl). The cellular location for the mobile device may be obtained from at least one of: a HLR, a HSS, a mobile user database and a location register.

The device location may comprise, or be derived from, one or more of a cell identifier (Cell ID, ECGI); a base station ID (eNB ID; Global eNB ID); a Location Area Code (LAC); a Mobile Network Code (MNC); a Mobile Country Code (MCC); a Tracking Area Code (TAC) and a Tracking Area Identity (TAl).

The call processing unit may be further configured to trigger the transmission of a localisation message to the mobile identifier associated with the mobile device and to subsequently obtain cellular location for the mobile device associated with the mobile identifier. The localisation message may be one or more of: a text message, a Short Message Service (SMS) message, a hidden SMS, a system message, a paging message and an application message.

According to a second aspect of the present disclosure, there is provided a method, according to independent claim 7, of processing a call in a communication system. The method comprises receiving a session establishment message from a calling device, the message comprising a caller identifier; determining that the caller identifier is associated with a mobile identity and that a mobile device was in the proximity of the calling device when the session establishment message was generated at the calling device, the mobile device being associated with the mobile identity; obtaining a cellular location for the mobile device; and modifying the session establishment message to include a mobile identifier associated with the mobile device and to include device location information based on the obtained cellular location.

In some examples, the device location information is obtained from at least one of: a HLR, a HSS, a mobile user database and a location register.

The device location information may be obtained by triggering the transmission of a localisation message to the mobile device and subsequently obtaining the device location for the mobile device. In some cases, the mobile device may send, in response to the localisation message, a location response message comprising mobile device location information. The localisation message may be one or more of: a text message, a Short Message Service (SMS) message, a hidden SMS, a system message, a paging message and an application message. The localisation message may be one or more of: a text message, a Short Message Service (SMS) message, a hidden SMS, a system message, a paging message and an application message.

The received session establishment message may comprise an indication of destination for the message and the method further comprising transmitting the modified session establishment message to the destination.

The method may further comprise determining that the mobile device was in the proximity of the calling device by determining that the received session establishment message comprises a presence indicator indicating that the calling device has detected the presence of the mobile terminal when generating the session establishment message.

The method may further comprise determining that the calling device was paired with the mobile device when generating the session establishment message. In some cases, determining that the calling device was paired with the mobile device can comprise determining that the received session establishment message comprises a pairing indicator, the pairing indicator indicating that the calling device was paired with the mobile device when generating the session establishment message.

According to another aspect of the present disclosure, there is provided a computer program, according to independent claim 16, comprising instructions configured to carry out, when executed, any method of the present disclosure, for example any method of the above second aspect.

### Figures

The teachings and techniques of the present disclosure will now be discussed with reference to the following illustrative drawings:
Figure 1 shows an example architecture for managing calls with an assistant device;
Figure 2 shows an example call flow from an assistant device;
Figure 3 shows an example call flow from an assistant device, in accordance with the present disclosure;
Figure 4 shows an example method in accordance with the present disclosure; and
Figure 5 shows an example call processing unit.

### Example implementations

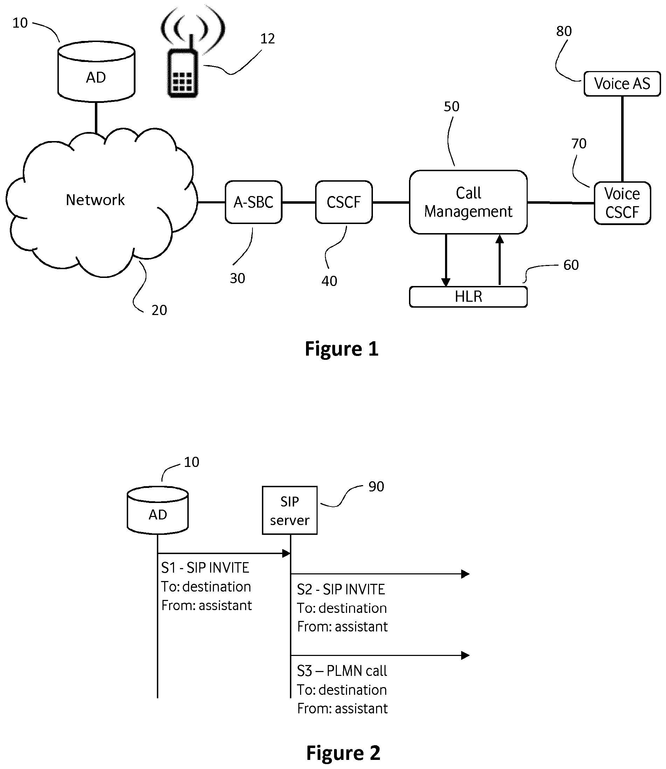

As discussed above, when using a home assistant device for establishing a call, some of the features usually associated with a fixed or mobile call may not be available. A simplified call flow is illustrated in Figure 2 which shows how a call can be established by an assistant device. The Assistant Device "AD" 10 sets up a call to a destination (e.g. phone number, SIP URI or any other suitable call destination identifier). Usually such devices will set up an IP call and can use the SIP protocol for the call signalling. At step S1, the AD 10 will then send a SIP INVITE (call establishment message) to a SIP server 90 or directly to a PLMN network that will then help establish the call with the destination party. This may involve processing the SIP INVITE before sending a session establishment message to the destination. For example, if the call can remain an IP and/or SIP only call, the SIP server 90 can send a SIP INVITE at step S2. On the other hand, of the call has to be sent to a fixed or mobile network, the SIP server 90 can establish the call over a PLMN network at step S3. The message sent at S3 may be sent directly or indirectly to the PLMN network. It would usually be expected that only one of S2 and S3 would be carried out in most cases, although this is not a requirement and the SIP server can attempt to connect to (or ring) two or more destination parties, whether they are for the same subscriber or for different subscribers (e.g. for a group call).

There are two main limitations with this type of calls. First, the call will be shown as coming from the assistant device 10 and the destination party will not necessarily know which user is associated with the assistant device. Second, the call is handled entirely outside any PLMN network (at the originating leg) such that, even in cases where the assistant device is a subscriber of a PLMN, the call can still not benefit from all the product and services associated with the user and its account. Additionally, in cases where the assistant is connected to a PLMN, it will still suffer from some of these limitations, namely the calling identifier will remain the assistant identifier and the call will not be able to make use of the full set of features available to the user.

With a view to addressing some of these limitations, it is herein proposed to modify the call establishment message from the assistant device to replace it with a mobile number as if the call had originated from the mobile network. However, such an arrangement can still suffer from significant security and safety problems and can benefit from further security and safety features. For example, there is a risk that the mobile number is included in the wrong circumstances, e.g. when it should not be used, resulting in possible security breaches and this could also result in security and safety problems - as will be clear from the discussion below.

For example, if a first user uses an audio recording of a second user for establishing a call in the name of the second user, by establishing the call as if he had come from the mobile network, the first user may in essence spoof the second user and make use of the second user's account. The first user may then make calls which will be paid for using the second user's account, while the second user is unaware of this. This can create significant security problems and can for example lead to identity theft or fraud.

With respect to safety, there is a risk of having an inaccurate location for a user. In particular, when using a mobile number as the source of a call, it is often expected that the call establishment message will also provide a location for use by emergency services. Even if the assistant devices could potentially be configured to include their location in the call establishment messages, this does not guarantee that the location information is accurate. In the example above where the first user uses the second user's account fraudulently, the location of the assistant device would be end up being incorrectly associated with the second user. Another limitation is that the location information provided may not be a type of location information that is accepted in or understood by the mobile network, especially in the interfaces with law enforcement or emergency interfaces. This can create safety concerns when the location is used in combination with the mobile user's identity. This is the case whether the location is used immediately, e.g. for an emergency call or alert from the assistant device, or later, e.g. as the last known location of the second user account. In other cases where the assistant is not used fraudulently, using the device's location when setting up a call through the device can also have undesirable safety consequences. If the location does not correspond to the phone's last location but is still associated with the user's mobile subscriber account, this may again affect the last known location of the user's terminal (associated with the mobile number) which can then refer to incorrect location information for the mobile subscriber and/or terminal.

In view of at least these reasons and of some of the possible undesirable ramifications of associating an assistant device with a user's mobile number, the use of systems where a mobile number with an assistant device has been limited.

One possible solution to try to overcome or reduce the impact of these limitations is to use a SIM card within the assistance device. Accordingly, the AD can then connect directly to the mobile network for the subscriber using the SIM card and the mobile number of the subscriber can replace the mobile number of the AD when the call is forwarded to the called party. However, there are still limitations with such a solution as it requires significant structural and functional changes to the AD and it also fails to alleviate some of the security risks (and knock-on safety risks) identified above.

In accordance with the present disclosure, there is provided a system which enables the use of a mobile number as the source of a call originating from an assistant device while reducing the safety and security risks associated with such an association.

The example of Figure 1 provides a system which can be used in accordance with the teachings of the present disclosure, although other systems may also be suitable to implement such teachings. The system of Figure 1 comprises an assistant device "AD" 10, a user terminal or mobile terminal 12 associated with a mobile number. The AD 10 is connected to a transit network 20 or directly on the final network though an Access SBC (Session Border Controller). The network 20 can be of any suitable type to give the AD 10 access to one or more nodes associated with the mobile network for the mobile terminal 12. In some examples, this can be through a public network, e.g. the internet, while in other cases this could be through a connection to the mobile network that may or may not provide the AD 10 with access to the internet.

The AD 10 is connected to an SBC 30 such as an A-SBC or I-SBC (Interconnection-SBC) 30 through network 20, as illustrated in Figure 1. The I-SBC or A-SBC can for example operate as a P-CSCF or provide some of the functions of a P-CSCF in an IMS network. In this example, it is used as an entry point to the IP voice network and provides security and call processing features for call messages entering or leaving the IP voice network. The SBC 30 is connected to a CSCF 40 which itself is connected to a call management "CM" server 50. In the example of a voice network being or being part of an IMS network, the CM server 50 can for example be provided as an Application Server "AS". The CM server 50 can also be connected to a user database 60, which can for example be an HLR, HSS or any other suitable user database. The call management server 50 is also connected to a voice CSCF 70 which in turn is connected to a voice AS 80.

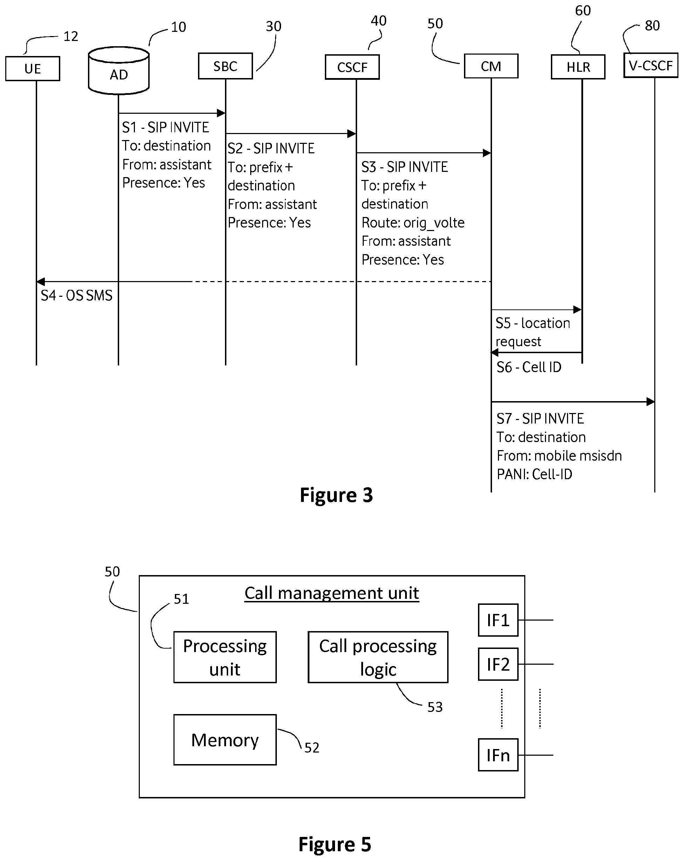

Figure 3 illustrates an example of a call flow wherein the AD device 10 is used in association with the mobile subscriber account for a terminal device 12 for establishing a call. At step S1, the AD 10 sends a call setup message to an SBC 30 associated with the mobile subscriber. The call setup message can be in accordance with the SIP protocol in which case it would be a SIP INVITE message. The SIP INVITE message will include a source and a destination for the call and the AD 10 will configure the message to show the AD 10 as the source and the called party as the destination. The identity used for the assistance device may be any suitable identity for being able to identify the AD 10. For example, it could be a SIP URI or it could be an identity in a MSISDN or MSISDN-like format. For example, it can be in an MSISDN, MSISDN-like or telephone number format but being from a number set or range that that is not allocated to a fixed or mobile network. Such a number can sometimes be referred to as a *nomadic* number. In this example, the AD 10 will also provide an indication that the terminal 12 is in the proximity of the assistant device 12 with a positive indication in a "Presence" field. For example in SIP, a SIP INVITE will have an "X-Presence" field that can be used according to the present disclosure.

This presence can be detected in a number of ways. For example, the terminal 12 may be close enough to the AD 10 so that they can communicate with each other through a relatively short-range protocol or Personal Area Network ("PAN") protocol such as Bluetooth, or even comparing both devices' geographical coordinates (or more generally locations). With this presence indicator, the AD 10 can indicate or communicate the presence of the terminal 12 in the vicinity of, or near, the AD 10 when the call establishment message was generated and/or transmitted.

The SIP INVITE is received by the SBC or A-SBC at the edge of the system or network that can handle calls for the mobile subscriber. The SBC 30 can then process the incoming INVITE in accordance with its own rules. For example, if appropriate it can add a prefix to the destination number, although in other cases this is done at an earlier stage of the originating leg such that the prefix is already included when the message reaches the SBC 30. The SBC 30 may also inspect, modify or apply security rules to the INVITE. Once the call establishment message has been processed by the SBC 30, the SBC 30 sends it on to the CSCF 40 at step S2, with any modification that has been applied. As the skilled person will appreciate, in some instances, the SBC 30 may determine that it is not safe to forward the message, as part as the security checks carried out by the SBC 30. Again, the CSCF may process the call establishment message according to its own rules. In this case, the CSCF can detect that the call is associated with a mobile subscriber who is eligible for a service, for example a "single number" service. For example, the CSCF can recognise the source of the message, i.e. the AD 10, as associated with a mobile subscriber who is registered for the relevant service. In another example, the call establishment message may include a field which indicates an identifier associated with the mobile subscriber, for example, a mobile number, a subscriber number, etc. It will be appreciated that other implementations may be used for determining which messages the CSCF 40 can send to the CM 50. More generally, the CSCF may be configured to send to the CM 50, for the CM 50 to provide a service, according to one or more rules which might include: (1) all calls with an unrecognised or unidentified source identifier are forwarded; (2) all calls are forwarded, e.g. regardless of the source identity; (3) calls where the source device is associated with the service (or is not associated with the service); (4) calls where the source user is associated with the service (or is not associated with the service) or (5) calls where the call setup message includes an indication that the message should be forwarded and/or that the call is eligible to the service.

When appropriate, the CSCF 40 can then forward at step S3 the call to the Call Management "CM" server 50 for providing this service. As illustrated in Figure 3, the CSCF 40 can also modify the call establishment message prior to forwarding it to facilitate further processing. In the example of Figure 3, the CSCF 40 can include or modify a "Route" field in the SIP INVITE. The skilled person will appreciate that in other examples the CSCF 40 may not modify the message or might modify it differently.

The CM 50 is a module for enabling the use of a mobile identifier, e.g. a mobile number, as the source of an AD call while providing features with a view to improving the security and safety levels. Typically, the CM 50 would be expected, once it has receives a call establishment message (e.g. from the CSCF 40) at S3, to be able to carry the following steps:
(i) to determine whether the terminal 12 was in the proximity of the AD 10 when the call was initiated
(ii) to identify which subscriber is associated which the AD 10 identified as the source of the call in the call establishment message and
(iii) to obtain location information for the terminal 12.

It is noteworthy that these steps may be carried out in any order that is technically possible or available and may not always all be carried out, depending on the situation. In addition, they may be carried sequentially or one or more steps may overlap with each other. For example, in some cases the CM 50 will consider step (i) first and steps (ii)-(iii) at a later stage, e.g. only if terminal presence is detected at (i). It is also conceivable that step (i) and steps (ii)-(iii) could be carried out in the opposite order or in parallel (partially or entirely).

While doing step (i) first and putting a condition on carried out steps (ii)-(iii) based on the outcome of step (i) is likely to improve resource utilisation efficiency, it may also take longer than in a system where steps (ii)-(iii) are performed before or during step (i). The skilled person will appreciate that one implementation may be preferred over the other depending on the priorities associated with low-delay, efficiency or any other appropriate factor.

Regarding the presence detection at step (i), in the example of Figure 3, the presence of the terminal 12 in the proximity of the AD 10 at a time when the call was initiated can be determined using the presence indicator in the SIP INVITE received from the AD 10 (through the SBC and CSCF). It is expected that in many cases this indicator is included when the terminal 12 is in the proximity and/or paired with the AD 10. The pairing usually relies on a technology with a relatively small range, e.g. Bluetooth, or any other suitable system.

The presence of the terminal 12 may be detected in any suitable way and other proximity detection methods may be used. For example, the AD 10 may prompt the terminal to send its location to the mobile network which can then make a determination regarding whether the terminal 12 is in the vicinity of the AD 10. In another example, the terminal may communicate its location, e.g. GPS location, to the AD 10 and/or to the network so that a proximity determination can be made.

Now turning to step (ii), regarding the identification of the subscriber associated with the AD 10 from which the call setup message originates, the CM 50 may optionally determine whether there is a subscriber associated with AD 10, e.g. in cases where all call set up messages are sent to the CM 50. It is expected than in most cases, CM 50 will have access to a database or repository comprising subscriber information (which may be the same as HLR 60 or a different one). The subscriber information can comprise one or more user and/or device identifiers that are associated with a subscriber account. For example, a subscriber may be associated with one or more mobile numbers, one or more fixed numbers, one or more AD identities and so on. Accordingly, using user and/or device information from the call setup message received, CM 50 can access the subscriber information to determine if the call setup message is associated with a particular subscriber. CM 50 will obtain a mobile identifier for the subscriber and terminal, either at the same time or later. The mobile identifier can for example be or correspond to a mobile number associated with the subscriber, for example a main mobile number associated with the account.

If a subscriber is identified, CM 50 can turn to step (iii) to attempt to retrieve location information for the device 12 for the identified subscriber. It is expected that in many cases, it may be desirable to use a cellular location for the corresponding mobile identifier. In such cases, CM 50 can send a location request to the HLR (or HSS or any other equivalent element in a mobile network, such as a location repository) to obtain the latest cellular location for this mobile identifier. Accordingly, the CM 50 may access a subscriber or user databases, such as the HLR 60 to retrieve the last known location of the terminal.

In some cases, it may desirable to update the location information for the terminal before it is obtained so as to increase the likelihood of having an up-to-date location for the terminal. In such a case, it is proposed that CM 50 causes or triggers a message to be sent to the terminal 12 corresponding to the mobile identifier (see step S4), for example using the mobile identifier. For example, such a localisation message can be a text message such as Short Message Service (SMS) message. In particular, the message may be an OS SMS or "hidden" SMS which is a type of SMS that is no normally displayed or shown to the user. For example, the localisation message may be any type of message that will prompt the terminal to connect to the network and thereby to update its location with the mobile network. In some examples, a SMS is used with a data coding scheme that is set to the coding scheme zero. This coding scheme will cause the terminal to make the phone connect again to the network but will not show any content to the user. Once the terminal connects to the network, its location in the network will be updated and refreshed in the network, e.g. in the HLR 60.

For example, a SMS, hidden SMS, a system message, a paging message or an application message. An application may for example be a message that is sent or received by an application on the mobile device. A system message is for example a message that is sent or received by the operation system of the mobile device. This type of localisation message will result in the cellular location for the terminal in the mobile network (e.g. HLR) to be updated. Accordingly, the cellular location for the mobile identifier in the HLR is now expected to be more accurate and less likely to be misleading. CM 50 can send a location request to HLR 60 and obtain the latest cellular location associate with the mobile identifier (see steps S5 and S6).

In other examples, CM 50 may obtain the cellular location using a different technique (e.g. requesting the cellular location directly to the terminal) and/or may obtain another type of location. For example, the location may correspond to geo-coordinates (e.g. latitude, longitude and optionally altitude) or any other type of location information. It is noteworthy that in some cases, the location information obtained for the mobile identifier might correspond and/or be derived from location obtained for determining if the terminal is in the proximity of AD 10. If for example geo-coordinates are used in both cases, the location information used by CM 50 to modify the call setup message may be based on the geo-coordinates used to confirmed proximity of the terminal 12 and AD 10.

Regardless of the specific technique(s) used, after S6, CM 50 has been able to identify that the terminal 12 was in the proximity of AD 10 and to obtain location information for the mobile identifier corresponding to the terminal 12. It is noteworthy that it is expected that by provisioning and/or transmission of identification information, CM 50 can have confidence that the terminal in the vicinity of AD 10 should correspond to the terminal associated with the mobile identifier. This could be done through some provisioning of data relative to AD 10 and/or through the transmissions of one or more of terminal, mobile or AD identifiers by one of or both of the terminal 12 and AD 10.

Once the CM 50 has made a determination that the terminal 12 was in the vicinity of AD 10 when the call was initiated (which is expected to correspond substantially to when the call setup / sessions establishment message is generated) and has obtained a mobile identifier associated with the terminal 12 and a cellular location for this terminal, CM 50 can modify the call setup message so that it appears to come from the terminal 12. The techniques discusses herein help increase the security and safety level associated with making such a change and help reduce the risk of using the mobile identifier (e.g. mobile number) when this is inappropriate.

In the example of Figure 3, CM 50 modify the call establishment message to use the mobile identifier as the source ("From: mobile MSISDN) and to include a mobile or cellular location associated with the mobile identifier ("PANI: Cell-ID", where PANI stands for "P-Access-Network-Info"). The modified call setup message can then be transmitted to the destination. For example, here it is sent to the V-CSCF 80. In other examples, it may be sent to the destination via any other appropriate elements for reaching the destination indicated in the modified call setup message.

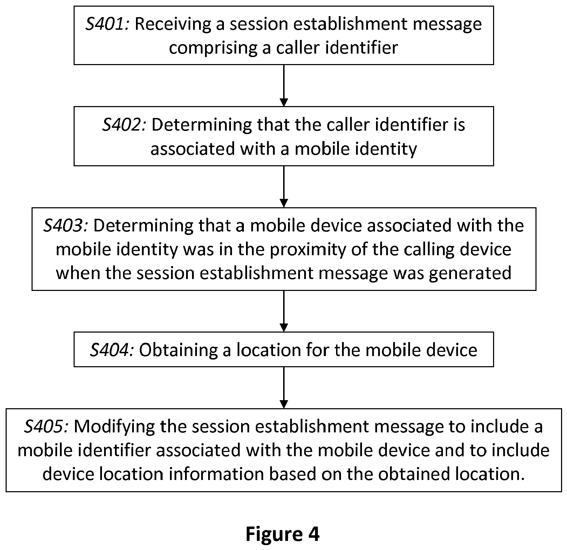

Figure 4 shows an example method in accordance with the teachings of the present disclosure. In this example method, at step S401 a session establishment message is received that comprises a caller identifier. The caller identified is for example associated with a calling device. In this case, it will be appreciated that the caller identifier might be an identifier for the calling device or it might for example be associated with a user associated with the calling device. At S402, it is determined that the caller identifier is associated with a mobile identity, for example by checking a user or subscriber information database or repository. At S403, it is determining that a mobile device associated with the mobile identity was in the proximity of the calling device when the session establishment message was generated. For example, the mobile device was paired with the calling device when the session was initiated / when the session establishment message was generated.

At S404, (optionally: upon the determination of S402 and/or S403,) a location is obtained for the mobile device. For example, a cellular location may be obtained for the mobile device. The location may be obtained by sending a localisation message to the mobile device or to the mobile identifier associated with the mobile device and by subsequently obtaining the cellular location for the mobile device. At S405, the session establishment message is modified to include a mobile identifier associated with the mobile device, for example as the source of the message, and to include device location information based on the obtained location. In some cases, the device location information may be identical to the obtained location and, in other cases, it will be different but derived from it. The modified message may then be sent to a destination, which is expected to be identified from a destination indication in the received session establishment message.

Accordingly, when a call is established from an assistant device while the mobile device is in the proximity of the assistant device, the ultimate receiver of the call establishment message can see the call as being originating from the mobile device. On the other hand, security and safety measures have been put in place to reduce the risk of fraud and of inaccurate information being provided to emergency services - amongst other things.

Figure 5 illustrates an example call management unit 50. The call management unit 50 can comprise a processing unit 51, such as any combination of at least one of: a CPU, a GPU or another type of processing unit; a memory 52, such as a volatile and/or non-volatile memory which may store data, software, etc.; call processing logic 53 which can be configured to implement the features or teachings of the present disclosure and one or more interfaces IF1... IFn (with n ≥ 1) for communicating with one or more other elements. Each interface can for example be for a direct connection, for connection over a network (network interface) or any other type of connection and may be for wired or wireless communications. It will be appreciated that a call manager or call management unit 50 may in some cases include more or fewer elements than illustrated in Figure 5 and that some elements may be combined or at least partially overlap. For example, the logic for the call processing logic may be provided as a software configured to execute, when running, a method implementing techniques according to the present invention. The software may be stored on memory 52 - or on a separate memory provided additionally to memory 52.

In accordance with the present disclosure, by taking measures to ensure that the terminal is in the vicinity of the assistance device and that the location provided for the terminal is accurate, the risk of impersonation and the risk of providing inaccurate information to emergency services can be reduced. It is expected that the techniques discussed herein will thus help make such a modification of the source of the call safe and secure enough to be used in a number of countries.

While techniques according to the present disclosure have been illustrated with the example of Figure 3, it will be appreciated that the present disclosure is not limited to this particular example. For example, the term "call" should be understood in a broad way and as including a session. A session can for example include one or more of data, voice, video, messaging and any other media transmission.

In addition, while it is expected that some of the features discussed herein will likely be implemented in the elements presented in this example (e.g. SBC, CSCF, etc.) it will be appreciated that in other examples such features may be implemented as part of another element or as part of a standalone element.

Additionally, the call flow illustrated in Figure 3 is an example call flow and in other examples, more; fewer and/or different messages may be exchanged without departing from the teachings of the present disclosure. For examples, messages may be exchanged which have not been illustrated in Figure 3 and further modifications may be made to the messages which have not been illustrated or discussed herein.

With respect to the terminal being in the vicinity of the assistant device, in most cases this is expected to be determined based on whether is paired with the assistant device. Such assistance devices tends to be configured such that they are only paired with terminals if the terminals are close to the assistance device, for example within a few meters or a few centimetres (in some cases, within about 20m, 10m, 5m, 3m, 2m, 1m or less). In other cases, the terminal and/or the assistance device can determine a presence or an estimated distance between the assistance device and mobile device, by measuring the strength of a signal sent to or from the assistant device and/or to or from the terminal. The estimated distance may be estimated using a distance unit or using a scoring unit, e.g. the stronger the signal, the higher the score. The signal may be a communication signal (e.g. a signal that is used as part of conventional data or information communications from or to the terminal or assistant device) or may be a reference signal, such as a beacon signal. Based on the presence, and optionally strength, of a received signal, the assistant device (or terminal) can estimate whether it is in the vicinity of the terminal (or assistant device, respectively).

In accordance with the present disclosure, the mobile identifier might be a mobile number, for example in an MSISDN format (including a Country Code "CC", National Destination Code "NDC" and Subscriber Number "SN" - e.g. 447123456789), a national mobile number (e.g. 07123456789) or any other suitable number, such a telephone number associated with the mobile subscriber. The mobile identifier may also be provided in a URI format such as one commonly used in SIP messaging, for example 0123456789@vodafone.com, or any other suitable format. It will be appreciated that the identifier may be a URI or URI-like identifier and may include an MSISDN, MSISDN-based or MSISDN-like identifier. The assistant device identifier may also be in a URI format or any other suitable format. If the identifier comprises a telephone number (e.g. in an MSISDN

In the present disclosure, it is hereby expressly considered that any two or more features or techniques disclosed herein might be combined, so long as they can technically be combined. Also, while the method steps have generally been presented in a specific order, the present disclosure encompasses methods where any of the method steps are carried in a different order and/or in parallel to one or more other steps, so as long as it is technically feasible.

Additionally, in the interest of conciseness not all alternatives have been explicit discussed herein. As the skilled person will appreciate, in the present disclosure any aspect discussed from the perspective of an element being operable to do an action also discloses the same feature from the perspective of the method of doing the action. Likewise, any discussion presented from the perspective of a method step also discloses the same features from the perspective of any one or more suitable elements being operable to carry out some or all of the method steps. It is also considered within the present disclosure that for any method step(s), there can be a computer program configured to carry out, when executed, the method step(s).

Furthermore, the present disclosure discusses a device (such as an assistant device, a mobile device, a call manager, etc.) from a logical perspective, as an element carrying out the relevant function(s). Any such device may be implement using one or more physical elements as deemed appropriate. For example, it may be implemented in one (or more) of: a standalone physical device, in two or more separate physical devices, in a distributed system, in a virtual environment using any suitable hardware or hardware combination and using any software or software combination as appropriate. Likewise, for any disclosure of a device configured or operable to carry out a function, it is also hereby considered as disclosed any circuitry (comprising for example a transmitter and/or received, as appropriate), which is configured to carry out, when in use, the same function and a computer program which, when executed, performs the function and/or causes the device to perform the function. Furthermore, any device or functional element described herein may include, if appropriate, fewer, more and/or different functions or elements.

As the skilled person will appreciate, the example implementations, systems, devices and methods discussed herein are provided for illustrative purposes only and are not intended to limit the scope of the invention. The invention is defined in the appended claims.

## Claims

1. A call processing unit for processing a call in a communication system, the call processing unit being configured:
to receive a session establishment message from a calling device (10), the message comprising a caller identifier;
to determine that the caller identifier is associated with a subscriber, and that the subscriber is associated with a mobile identity, and that a mobile device (12) was in the proximity of the calling device (10) when the session establishment message was generated at the calling device (10), the mobile device (12) being associated with the mobile identity;
to obtain a location for the mobile device (12); and
to modify the session establishment message to include a mobile identifier associated with the mobile device (12) and to include device location information based on the obtained location.

2. The call processing unit of claim 1, wherein the location for the mobile device (12) is a cellular location for the mobile device (12).

3. The call processing unit of claim 2, wherein the cellular location comprises, or is derived from, one or more of a cell identifier; a base station ID; a Location Area Code, LAC; a Mobile Network Code, MNC; a Mobile Country Code, MCC; a Tracking Area Code, TAC and a Tracking Area Identity, TAI.

4. The call processing unit of claim 2 or 3, wherein the device location is obtained from at least one of: a Home Location Register, HLR, a Home Subscriber Server, HSS, a mobile user database and a location register.

5. The call processing unit of any one of claims 2 to 4, wherein the call processing unit is further configured to trigger the transmission of a localisation message to the mobile identifier associated with the mobile device (12) and to subsequently obtain the cellular location for the mobile device (12) associated with the mobile identifier.

6. The call processing unit of claim 5, wherein the localisation message is one or more of: a text message, a Short Message Service, SMS, message, a hidden SMS, a system message, a paging message and an application message.

7. A method of processing a call in a communication system, the method comprising:
receiving (S401) a session establishment message from a calling device (10), the message comprising a caller identifier;
determining (S402) that the caller identifier is associated with a subscriber, and that the subscriber is associated with a mobile identity, and that (S403) a mobile device (12) was in the proximity of the calling device (10) when the session establishment message was generated at the calling device (10), the mobile device (12) being associated with the mobile identity;
obtaining (S404) a cellular location for the mobile device (12); and
modifying (S405) the session establishment message to include a mobile identifier associated with the mobile device (12) and to include device location information based on the obtained cellular location.

8. The method of claim 7, wherein the device location information is obtained from at least one of: a Home Location Register, HLR, a home Subscriber Server, HSS, a mobile user database and a location register.

9. The method according to claim 7 or 8 wherein the device location information is obtained by triggering the transmission of a localisation message to the mobile device (12) and subsequently obtaining the device location for the mobile device (12).

10. The method of claim 9 wherein, in response to the localisation message, the mobile device (12) sending a location response message comprising mobile device location information.

11. The method of any one of claims 9 to 10, wherein the localisation message is one or more of: a text message, a Short Message Service, SMS, message, a hidden SMS, a system message, a paging message and an application message.

12. The method of any one of claims 7 to 11, wherein the received session establishment message comprises an indication of destination for the message and the method further comprising transmitting the modified session establishment message to the destination.

13. The method of any one of claims 7 to 12, comprising determining that the mobile device (12) was in the proximity of the calling device (10) by determining that the received session establishment message comprises a presence indicator indicating that the calling device (10) has detected the presence of the mobile terminal (10) when generating the session establishment message.

14. The method of any one of claims 7 to 13, comprising determining that the calling device (10) was paired with the mobile device (12) when generating the session establishment message.

15. The method of claim 14, wherein determining that the calling device (10) was paired with the mobile device (12) comprises determining that the received session establishment message comprises a pairing indicator, the pairing indicator indicating that the calling device (10) was paired with the mobile device (12) when generating the session establishment message.

16. A computer program comprising instructions configured to, when executed on a processing unit, cause the processing unit to carry out the method of any of claims 7 to 15.

## Patentansprüche

1. Anrufverarbeitungseinheit zur Verarbeitung eines Anrufs in einem Kommunikationssystem, wobei die Anrufverarbeitungseinheit konfiguriert ist zum:
Empfangen einer Sitzungseinrichtungsnachricht von einer anrufenden Vorrichtung (10), wobei die Nachricht eine Anruferkennung umfasst;
Bestimmen, dass die Anruferkennung einem Teilnehmer zugeordnet ist und dass der Teilnehmer einer mobilen Identität zugeordnet ist und dass sich eine mobile Vorrichtung (12) in der Nähe der anrufenden Vorrichtung (10) befand, als die Sitzungseinrichtungsnachricht an der anrufenden Vorrichtung (10) generiert wurde, wobei die mobile Vorrichtung (12) der mobilen Identität zugeordnet ist;
Abrufen eines Standorts der mobilen Vorrichtung (12); und
Ändern der Sitzungseinrichtungsnachricht, damit diese eine der mobilen Vorrichtung (12) zugeordnete mobile Kennung beinhaltet und Informationen zum Vorrichtungsstandort auf Basis des abgerufenen Standorts beinhaltet.

2. Anrufverarbeitungseinheit nach Anspruch 1, wobei es sich bei dem Standort der mobilen Vorrichtung (12) um einen zellularen Standort der mobilen Vorrichtung (12) handelt.

3. Anrufverarbeitungseinheit nach Anspruch 2, wobei der zellulare Standort einen oder mehrere einer Zellenkennung; einer Basisstations-ID; eines Standortbereichscodes (Location Area Code, LAC); eines mobilen Netzwerkcodes (Mobile Network Code, MNC); eines mobilen Ländercodes (Mobile Country Code, MCC); eines Verfolgungsbereichscodes (Tracking Area Code, TAC) und einer Verfolgungsbereichsidentität (Tracking Area Identity, TAI) umfasst oder davon abgeleitet ist.

4. Anrufverarbeitungseinheit nach Anspruch 2 oder 3, wobei der Vorrichtungsstandort abgerufen wird von zumindest einem von: einem Heimatstandortregister (Home Location Register, HLR), einem Heimatteilnehmerserver (Home Subscriber Server, HSS), einer mobilen Benutzerdatenbank und einem Standortregister.

5. Anrufverarbeitungseinheit nach einem der Ansprüche 2 bis 4, wobei die Anrufverarbeitungseinheit ferner konfiguriert ist zum Auslösen der Übermittlung einer Lokalisierungsnachricht an die mobile Kennung, die der mobilen Vorrichtung (12) zugeordnet ist, und zum anschließenden Abrufen des zellularen Standorts der mobilen Vorrichtung (12), die der mobilen Kennung zugeordnet ist.

6. Anrufverarbeitungseinheit nach Anspruch 5, wobei die Lokalisierungsnachricht eine oder mehrere ist von: einer Textnachricht, einer Nachricht über einen Kurznachrichtenübermittlungsdienst (Short Message Service, SMS), einer versteckten SMS, einer Systemnachricht, einer Funkrufnachricht und einer Anwendungsnachricht.

7. Verfahren zum Verarbeiten eines Anrufs in einem Kommunikationssystem, wobei das Verfahren umfasst:
Empfangen (S401) einer Sitzungseinrichtungsnachricht von einer anrufenden Vorrichtung (10), wobei die Nachricht eine Anruferkennung umfasst;
Bestimmen (S402), dass die Anruferkennung einem Teilnehmer zugeordnet ist und dass der Teilnehmer einer mobilen Identität zugeordnet ist und dass sich (S403) eine mobile Vorrichtung (12) in der Nähe der anrufenden Vorrichtung (10) befand, als die Sitzungseinrichtungsnachricht an der anrufenden Vorrichtung (10) generiert wurde, wobei die mobile Vorrichtung (12) der mobilen Identität zugeordnet ist;
Abrufen (S404) eines zellularen Standorts der mobilen Vorrichtung (12); und
Ändern (S405) der Sitzungseinrichtungsnachricht, damit diese eine der mobilen Vorrichtung (12) zugeordnete mobile Kennung beinhaltet und Informationen zum Vorrichtungsstandort auf Basis des abgerufenen zellularen Standorts beinhaltet.

8. Verfahren nach Anspruch 7, wobei die Informationen zum Vorrichtungsstandort abgerufen werden von zumindest einem von: einem Heimatstandortregister (Home Location Register, HLR), einem Heimatteilnehmerserver (Home Subscriber Server, HSS), einer mobilen Benutzerdatenbank und einem Standortregister.

9. Verfahren nach Anspruch 7 oder 8, wobei die Informationen zum Vorrichtungsstandort abgerufen werden, indem die Übermittlung einer Lokalisierungsnachricht an die mobile Vorrichtung (12) ausgelöst und anschließend der Vorrichtungsstandort der mobilen Vorrichtung (12) abgerufen wird.

10. Verfahren nach Anspruch 9, wobei die mobile Vorrichtung (12) als Antwort auf die Lokalisierungsnachricht eine Standortantwortnachricht umfassend Informationen zum Standort der mobilen Vorrichtung sendet.

11. Verfahren nach einem der Ansprüche 9 bis 10, wobei die Lokalisierungsnachricht eine oder mehrere ist von: einer Textnachricht, einer Nachricht über einen Kurznachrichtenübermittlungsdienst (Short Message Service, SMS), einer versteckten SMS, einer Systemnachricht, einer Funkrufnachricht und einer Anwendungsnachricht.

12. Verfahren nach einem der Ansprüche 7 bis 11, wobei die empfangene Sitzungseinrichtungsnachricht eine Angabe eines Ziels für die Nachricht umfasst und das Verfahren ferner die Übermittlung der geänderten Sitzungseinrichtungsnachricht an das Ziel umfasst.

13. Verfahren nach einem der Ansprüche 7 bis 12, umfassend das Bestimmen, dass sich die mobile Vorrichtung (12) in der Nähe der anrufenden Vorrichtung (10) befand, indem bestimmt wird, dass die empfangene Sitzungseinrichtungsnachricht einen Präsenzindikator umfasst, der angibt, dass die anrufende Vorrichtung (10) die Präsenz des mobilen Endgeräts (10) erkannt hat, als die Sitzungseinrichtungsnachricht generiert wurde.

14. Verfahren nach einem der Ansprüche 7 bis 13, umfassend das Bestimmen, dass die anrufende Vorrichtung (10) mit der mobilen Vorrichtung (12) gekoppelt wurde, als die Sitzungseinrichtungsnachricht generiert wurde.

15. Verfahren nach Anspruch 14, wobei das Bestimmen, dass die anrufende Vorrichtung (10) mit der mobilen Vorrichtung (12) gekoppelt wurde, das Bestimmen umfasst, dass die empfangene Sitzungseinrichtungsnachricht einen Kopplungsindikator umfasst, wobei der Kopplungsindikator angibt, dass die anrufende Vorrichtung (10) mit der mobilen Vorrichtung (12) gekoppelt wurde, als die Sitzungseinrichtungsnachricht generiert wurde.

16. Computerprogramm umfassend Anweisungen, derart konfiguriert, dass sie bei Ausführung auf einer Verarbeitungseinheit veranlassen, dass die Verarbeitungseinheit das Verfahren nach einem der Ansprüche 7 bis 15 ausführt.

## Revendications

1. Une unité de traitement d'appels destinée au traitement d'un appel dans un système de communication, l'unité de traitement d'appels étant configurée de façon à :
recevoir un message d'établissement de session à partir d'un dispositif d'appel (10), le message contenant un identifiant d'appelant,
déterminer que l'identifiant d'appelant est associé à un abonné, et que l'abonné est associé à une identité mobile, et qu'un dispositif mobile (12) se trouvait à proximité du dispositif d'appel (10) lorsque le message d'établissement de session a été généré au niveau du dispositif d'appel (10), le dispositif mobile (12) étant associé à l'identité mobile,
obtenir un emplacement pour le dispositif mobile (12), et
modifier le message d'établissement de session de façon à inclure un identifiant mobile associé au dispositif mobile (12) et à inclure des informations de localisation de dispositif en fonction de l'emplacement obtenu.

2. L'unité de traitement d'appels selon la Revendication 1, où l'emplacement pour le dispositif mobile (12) est un emplacement cellulaire pour le dispositif mobile (12).

3. L'unité de traitement d'appels selon la Revendication 2, où l'emplacement cellulaire comprend, ou est dérivé de, un ou plusieurs éléments parmi un identifiant de cellule, un ID de station de base, un code de zone de localisation, LAC, un code de réseau mobile, MNC, un code de pays mobile, MCC, un code de zone de suivi, TAC et une identité de zone de suivi, TAI.

4. L'unité de traitement d'appels selon la Revendication 2 ou 3, où l'emplacement de dispositif est obtenu à partir d'au moins un élément parmi : un registre de localisation nominal, HLR, un serveur d'abonnés domestiques, HSS, une base de données d'utilisateurs mobiles et un registre de localisation.

5. L'unité de traitement d'appels selon l'une quelconque des Revendications 2 à 4, où l'unité de traitement d'appels est configurée en outre de façon à déclencher la transmission d'un message de localisation à l'identifiant mobile associé au dispositif mobile (12) et subséquemment à obtenir l'emplacement cellulaire pour le dispositif mobile (12) associé à l'identifiant mobile.

6. L'unité de traitement d'appels selon la Revendication 5, où le message de localisation est un ou plusieurs messages parmi : un message textuel, un message de service d'envoi de messages courts, SMS, un SMS masqué, un message système, un message de radiomessagerie et un message d'application.

7. Un procédé de traitement d'un appel dans un système de communication, le procédé comprenant :
la réception (S401) d'un message d'établissement de session à partir d'un dispositif d'appel (10), le message contenant un identifiant d'appelant,
la détermination (S402) que l'identifiant d'appelant est associé à un abonné, et que l'abonné est associé à une identité mobile, et (S403) qu'un dispositif mobile (12) se trouvait à proximité du dispositif d'appel (10) lorsque le message d'établissement de session a été généré au niveau du dispositif d'appel (10), le dispositif mobile (12) étant associé à l'identité mobile,
l'obtention (S404) d'un emplacement cellulaire pour le dispositif mobile (12), et
la modification (S405) du message d'établissement de session de façon à inclure un identifiant mobile associé au dispositif mobile (12) et à inclure des informations de localisation de dispositif en fonction de l'emplacement cellulaire obtenu.

8. Le procédé selon la Revendication 7, où les informations de localisation de dispositif sont obtenues à partir d'au moins un élément parmi : un registre de localisation nominal, HLR, un serveur d'abonnés domestiques, HSS, une base de données d'utilisateurs mobiles et un registre de localisation.

9. Le procédé selon la Revendication 7 ou 8 où les informations de localisation de dispositif sont obtenues par le déclenchement de la transmission d'un message de localisation au dispositif mobile (12) et subséquemment l'obtention de l'emplacement de dispositif pour le dispositif mobile (12).

10. Le procédé selon la Revendication 9 où, en réponse au message de localisation, le dispositif mobile (12) envoie un message en réponse de localisation contenant des informations de localisation de dispositif mobile.

11. Le procédé selon l'une quelconque des Revendications 9 à 10, où le message de localisation est un ou plusieurs messages parmi : un message textuel, un message de service d'envoi de messages courts, SMS, un SMS masqué, un message système, un message de radiomessagerie et un message d'application.

12. Le procédé selon l'une quelconque des Revendications 7 à 11, où le message d'établissement de session reçu contient une indication de destination pour le message et le procédé comprend en outre la transmission du message d'établissement de session modifié à la destination.

13. Le procédé selon l'une quelconque des Revendications 7 à 12, comprenant la détermination que le dispositif mobile (12) se trouvait à proximité du dispositif d'appel (10) par la détermination que le message d'établissement de session reçu contient un indicateur de présence indiquant que le dispositif d'appel (10) a détecté la présence du terminal mobile (10) lors de la génération du message d'établissement de session.

14. Le procédé selon l'une quelconque des Revendications 7 à 13, comprenant la détermination que le dispositif d'appel (10) a été apparié avec le dispositif mobile (12) lors de la génération du message d'établissement de session.

15. Le procédé selon la Revendication 14, où la détermination que le dispositif d'appel (10) a été apparié avec le dispositif mobile (12) comprend la détermination que le message d'établissement de session reçu comprend un indicateur d'appariement, l'indicateur d'appariement indiquant que le dispositif d'appel (10) a été apparié avec le dispositif mobile (12) lors de la génération du message d'établissement de session.

16. Un programme informatique comprenant des instructions configurées de façon à, lorsqu'elles sont exécutées sur une unité de traitement, amener l'unité de traitement à exécuter le procédé selon l'une quelconque des Revendications 7 à 15.
